# EUROPÄISCHE PATENTSCHRIFT

(11) **EP 1 921 958 B1**
(45) Veröffentlichungstag und Bekanntmachung des Hinweises auf die Patenterteilung: **05.08.2009**
(21) Anmeldenummer: 06792827.5
(22) Anmeldetag: 16.08.2006
(51) Int. Cl.: A47J 43/07

(54) **KÜCHENGERÄT MIT EINER MAGNETISCHEN SICHERHEITSVERRIEGELUNG**
KITCHEN APPLIANCE COMPRISING A MAGNETIC SAFETY LOCK SYSTEM
APPAREIL DE CUISINE EQUIPE D'UNE VERROUILLAGE DE SECURITE MAGNETIQUE

(30) Priorität: 26.08.2005 DE 102005040509
(43) Veröffentlichungstag der Anmeldung: 21.05.2008
(73) Patentinhaber: BSH Bosch und Siemens Hausgeräte GmbH, 81739 München (DE)
(72) Erfinder: OBLAK, Aleksander, 3332 Recica/Savinji (SI); PESEC, Jurij, 3301 Petrovce (SI); RUDEZ, Darko, 3230 Sentjur (SI)
(86) Internationale Anmeldenummer: PCT/EP2006/065340
(87) Internationale Veröffentlichungsnummer: WO 2007/023117

(56) Entgegenhaltungen:
- EP-A1- 0 120 496
- DE-A1- 3 904 983
- DE-A1- 19 513 224
- DE-C1- 4 126 721
- US-A- 5 806 413
- US-B1- 6 629 492

## Beschreibung

Die Erfindung betrifft ein Küchengerät, insbesondere ein elektromotorisches Küchengerät, vorzugsweise eine elektromotorische Solo- oder Universalküchenmaschine, umfassend einen Einschalter und eine dem Einschalter zugeordnete Sicherheitsverriegelung, die den Einschalter nur dann entriegelt und einen Betrieb des Küchengeräts zulässt, wenn das Küchengerät ordnungsgemäß zusammengebaut ist, wobei die Sicherheitsverriegelung mindestens einen Magnetschalter mit mindestens einem Magneten und mindestens einem Magnetsensor aufweist.

DE 691 01 451 C1 betrifft ein elektrisches Küchengerät mit mehreren Funktionen zum Bearbeiten von Lebensmitteln, welches ein Gehäuse aufweist. Ein Bereich des Gehäuses bildet einen Sockel zur Aufnahme von verschiedenen Zubehörteilen, welche eine Arbeitsschüssel mit einem Deckel aufweisen, in der sich ein Werkzeug dreht. Das Werkzeug kann beispielsweise ein Hackmesser, ein Gemüseschneider oder eine Saft-Zentrifuge kann und wird durch eine im Boden der Schüssel ausgebildete Öffnung durch die Abtriebswelle eines Motors angetrieben. Das Gerät weist eine elektrische Steuervorrichtung zum Einschalten des Motors auf, welche eine Detektor-Vorrichtung zur Feststellung der Anwesenheit des Deckels auf der Arbeitsschüssel aufweist, welche die Steuervorrichtung in eine aktive Stellung bringen kann, in welcher das Einschalten des Motors zugelassen wird, wenn der Deckel in seine richtige Schließstellung auf der Arbeitsschüssel gebracht ist. Weiter weist die Steuervorrichtung einen Geschwindigkeitsregler auf, der zur Einstellung der Umdrehungsgeschwindigkeit der Antriebswelle in Abhängigkeit des verwendeten Werkzeugs bestimmt ist. Die Detektorvorrichtung weist zur Feststellung der Anwesenheit einer Arbeitsschüssel bzw. eines Deckels einen Hall-Sensor auf, mit dem das Magnetfeld eines Magneten erfasst werden kann.

Aus der DE 31 21 252 ist ein Mehrzweck-Haushaltsgerät mit einer Anzahl austauschbarer Nahrungsmittel-Zubereitungswerkzeuge und einer abnehmbaren Schale bekannt, welches eine magnetisch wirkende Sicherheitsblockierung umfasst, mit der eine ordnungsgemäße Positionierung der Schale in dem Haushaltsgerät überwacht werden kann. Hierbei werden Fehler der magnetischen Blockiervorrichtung vermieden, indem alternierende magnetische Flüsse verwendet werden.

Die 195 13 224 A1 offenbart eine Küchenmaschine, die mit einer Sicherheitseinrichtung ausgestattet ist. Die Maschine kann nur dann betätigt werden, falls diese korrekt zusammengebaut worden ist. Dies wird mit Hilfe von Reed-Sensoren realisiert.

Das US-Patent US 6 629 492 B1 zeigt ebenfalls eine Küchenmaschine mit einer Sicherheitsvorrichtung, welche basierend auf einen Reed-Schalter funktioniert.

Die DE 41 26 721 C1 offenbart einen Handrührer mit einer Schalteinrichtung, um einen sicheren Betrieb zu gewährleisten.

US 5 806 413 zeigt einen Entsafter dessen sicherer Betrieb mit Hilfe eines Reed-Schalters gewährleistet ist.

EP 0 120 496 beschreibt ebenfalls eine Küchenmaschine mit einer magnetischen Sicherheitsvorrichtung, die mit Reed-Sensoren betrieben wird.

DE 39 04 983 A1 beschreibt ein Haushaltsgerät mit einer Sicherheitseinrichtung. Diese wird mit Hilfe eines Handbügels gesteuert und kann beispielsweise mittels Reed-Sensoren realisiert werden.

Es ist Aufgabe der vorliegenden Erfindung, ein Küchengerät, insbesondere ein elektromotorisches Küchengerät, bereitzustellen, welches im Betrieb besonders sicher ist und zuverlässig arbeitet.

Diese Aufgabe wird erfindungsgemäß durch das Küchengerät, wie in den unabhängigen Ansprüchen angegeben, gelöst. Weitere vorteilhafte Einzelheiten und Weiterbildungen, die jeweils einzeln angewandt oder beliebig miteinander kombiniert werden können, sind Gegenstand der jeweils abhängigen Ansprüche.

Erfindungsgemäß umfasst das Küchengerät, insbesondere ein elektromotorisches Küchengerät, vorzugsweise eine elektromotorische Solo- oder Universalküchenmaschine, einen Einschalter und eine dem Einschalter zugeordnete Sicherheitsverriegelung, die den Einschalter nur dann entriegelt und einen Betrieb des Küchengeräts zulässt, wenn das Küchengerät ordnungsgemäß zusammengebaut ist, wobei die Sicherheitsverriegelung mindestens einen Magnetschalter mit mindestens einem Magneten und mindestens einem Magnetsensor aufweist, wobei vorgesehen ist, dass der Magnetschalter einen weichmagnetisierbaren, insbesondere ferromagnetischen, Schaltschieber aufweist, mit dem ein von dem Magnetsensor zu erfassendes Magnetfeld beeinflusst, insbesondere an dem Magnetsensor konzentriert oder von dem Magnetsensor abgeschirmt, werden kann.

Die Sicherheitsverriegelung dient dazu, einen Betrieb des Küchengeräts auszuschließen, wenn das Küchengerät nicht vollständig geschlossen, zusammengebaut oder abgesichert ist. Insbesondere wenn ein mit dem Küchengerät verbindbares Werkzeug nicht vollständig an dem Küchengerät angesteckt ist, beispielsweise wenn ein Behälterdeckel eines Mixerbehälters nicht vollständig geschlossen ist, und eine gewisse Gefahr von den in dem Mixerbehälter rotierenden Schneidwerken ausgeht, soll eine Inbetriebnahme des Küchengeräts in der Regel unmöglich sein; mit Hilfe der Sicherheitsverciegelung wird der Einschalter des Küchengeräts blockiert.

Die Magnetschalter mit den Magneten und den Magnetsensoren sind derart an dem Küchengerät positioniert, dass mit ihnen eine umfassende Überwachung der Sicherheitssituation am Küchengerät erfolgen kann. Hierzu können die Magnetsensoren an den relevanten Kuppelstellen für Werkzeuge am Küchengerät angeordnet sein.

Durch die Verwendung von Reed-Sensoren als Magnetsensoren wird eine besondere Zuverlässigkeit bei der Erfassung eines ordnungsgemäßen Betriebszustands des Küchengeräts ermöglicht, da derartige Sensoren mit hoher Präzision arbeiten und durch eine geeignete Anordnung an dem Küchengerät weitgehend unempfindlich gegenüber Störungen bzw. Störeinflüssen sind.

Ein Reed-Sensor bzw. Reed-Schalter besteht in der Regel aus zwei Kontaktzungen aus ferromagnetischem Material, die unter inerter Atmosphäre (z.B. Stickstoff oder Edelgase) hermetisch dicht in ein Glasrohr eingeschmolzen werden. Nach dem Einschmelzen überlappen sich die Kontaktzungen innerhalb des Glaskörpers und bilden im Kontaktbereich einen Gasspalt. Beide Zungen können in der Kontaktzone im Kontaktmaterial beschichtet sein (z.B. Rodium, Rothenium usw.). Bei Annäherung eines ausreichend starken Magnetfeldes nehmen beide Kontaktzungen eine entgegengesetzte magnetische Polarität an und schließen dadurch den Kontakt. Die Vorteile von Reed-Sensoren sind, dass berührungslos geschaltet werden kann, sie preisgünstig herstellbar sind, keine Stromversorgung benötigen und (von Ausnahmen, wie z.B. Wolframkontakten abgesehen) keinen Minimalstrom erfordern. Sie weisen in der Regel eine sehr zuverlässige Kontaktgabe, einen niedrigen Übergangswiderstand (0.07 bis 0.2 Ohm im Neuzustand) und eine hohe Lebensdauer von mehreren 100 Millionen bis über eine Milliarde Schaltspiele bei Signallast auf. Da sie hermetisch dicht abgeschlossen sind, können sie auch bedenkenlos im Haushalt und auch in Verwendung mit Lebensmitteln verwendet werden. Grundsätzlich wird unter Schließkontakten (SPST-NO für Single Pole Single Throw - normally open), Öffnerkontakten (SPST-NC, d. h. Single Pole Single Throw - normally closed) Umschaltkontakten (SPDT-Single Pole Double Throw) und distabilen Kontakten unterschieden.

Mit Hilfe des weichmagnetisierbaren, insbesondere ferromagnetischen, Schaltschieber kann ein von dem Magnetsensor zu erfassendes Magnetfeld in der Weise beeinflusst werden, dass der Schalter betätigt wird, sobald der Schaltschieber in seine Schaltungsposition gebracht wird. Der Vorteil von einer Verwendung von Schaltschiebern ist, dass mit ihnen die Anzahl der für das Küchengerät benötigten Magnete reduziert werden können, wenn ein Magnetsensor und ein Magnet an einer Werkzeugkupplung am Küchengerät befestigt werden, so dass die verschiedenen mit dem Küchengerät verwendeten Werkzeuge statt eines weiteren Magneten lediglich einen Schaltschieber benötigen, der besonders einfach und preisgünstig herstellbar ist. Beispielsweise wird ein ferromagnetisches Material wie z.B. ein quaderförmiges Stück Eisen, an einem Vorsprung eines Mixerbehälters befestigt, der in eine dem Vorsprung entsprechende Aufnahme an dem Küchengerät eingreift, wobei an der Aufnahme der Magnet bzw. der Magnetsensor des Magnetschalters angeordnet ist. Durch das Einbringen des ferromagnetischen Materials in die Aufnahme wird der Magnetschalter betätigt und der Betrieb der Küchenmaschine freigegeben. Der Schaltschieber wird durch das Magnetfeld magnetisiert, wobei durch diese Magnetisierung der Magnetsensor aktiviert (bzw. deaktiviert) wird. Der Magnetsensor kann in diesem Fall als Reed-Sensor oder als Hall-Sensor ausgestaltet sein, wobei jedoch ein Reed-Sensor bevorzugt ist.

Erfindungsgemäß ist der Schaltschieber zwischen einer ersten Schieberposition und einer zweiten Schieberposition hin- und her beweglich, derart, dass im ordnungsgemäß zusammengebauten Zustand des Küchengeräts der Schaltschieber in einem Zwischenraum zwischen dem Magneten und dem Magnetsensor und sonst außerhalb des Zwischenraums angeordnet ist. Befindet sich der Schaltschieber in dem Zwischenraum, kann der Einschalter des Küchengeräts wirksam betätigt werden, d.h. der Einschalter wird durch die Sicherheitsverriegelung nicht blockiert. Befindet er sich außerhalb, bleibt ein Drücken des Einschalters wirkungslos und das Küchengerät kann nicht in Betrieb genommen werden.

Die Ausdehnung des Zwischenraums ist einerseits durch den (freien) Abstand des Magnetsensors von dem Magneten durch das Magnetfeld, anderseits durch den Raum des minimalen, für ein Schalten benötigten Magnetfeldes begrenzt. Das hierdurch definierte Volumen kann weniger als 3 cm³, insbesondere weniger als 2 cm³, beispielsweise weniger als 1 cm³, betragen. Der Zwischenraum kann mehr als 0,1 cm³, insbesondere mehr als 0,3 cm³ betragen.

Durch ein derartig geringes Volumen des Zwischenraums wird die Wahrscheinlichkeit reduziert, dass andere magnetisierbare Gegenstände in den Zwischenraum gelangen. Hierdurch wird eine unbeabsichtigte Freigabe des Einschalters und somit eine Fehlbedienung des Küchengeräts unwahrscheinlich.

In einer vorteilhaften Ausgestaltung der Erfindung weist das Küchengerät mindestens ein ansteckbares Werkzeug, insbesondere ein Pürier-, Misch-, Häcksel-, Knet- und/oder Schneidwerk, Schlag- bzw. Rührbesen, Getränkemixer, Durchlaufschnitzler, Getreidemühle, Zitrus- bzw. Fruchtpresse, Fleischwolf, und/oder ein Mixerbehälter auf, wobei das Werkzeug mit mindestens einer Werkzeugkupplung mit dem Küchengerät verbindbar ist, wobei an der Werkzeugkupplung ein erster Magnetschalter mit einem ersten Magnetsensor für die Überwachung einer ordnungsgemäßen Verbindung des Werkzeugs mit dem Küchengerät vorgesehen ist.

Mit Hilfe der Werkzeugkupplung kann somit eine Vielzahl von unterschiedlichen Werkzeugen mit dem Küchengerät verbunden werden und der erste Magnetschalter sorgt dafür, dass ein Betrieb des Küchengeräts nur dann möglich ist, wenn das jeweilige Werkzeug ordnungsgemäß mit dem Küchengerät verbunden ist.

Vorteilhafterweise weist der erste Magnetschalter einen ersten Magnet und einen magnetisierbaren, insbesondere weichmagnetisierbaren, vorzugsweise ferromagnetischen, ersten Schaltschieber auf, mit dem ein von dem ersten Magnetsensor zu erfassendes erstes Magnetfeld beeinflusst werden kann, wobei der erste Magnet küchengerätseitig und der erste Schaltschieber werkzeugseitig an der Werkzeugkupplung angebracht ist. Durch eine derartige Anordnung des ersten Magneten des ersten Schaltschiebers kann die Anzahl der für die jeweiligen Werkzeuge erforderlichen Magnete erheblich reduziert werden, da jeweils nur ein Magnet am Küchengerät erforderlich ist und die jeweiligen Werkzeuge nur über einen entsprechenden ersten Schaltschieber verfügen.

Der Schaltschieber ist vorteilhafterweise ein Block aus magnetisierbarer Materie, z.B. ein quaderförmiges Stück Eisen, mit einem Volumen von wenigen Kubikmillimetern.

Der erste Magnetschalter weist vorteilhafterweise einen ersten Magnet auf, der werkzeugseitig an der Werkzeugkupplung angebracht ist. Sowohl die Magnete wie auch der erste Schaltschieber können in Kunststoff eingegossen mit dem Werkzeug bzw. dem Küchengerät verbunden sein. Hierdurch kann insbesondere das magnetische Material vor Korrosion geschützt werden.

Ein zweiter Magnetschalter mit einem zweiten Magnetsensor ist insbesondere für die Überwachung eines ordnungsgemäßen Schließens des Mixerbehälters durch den Behälterdeckel vorgesehen. Mit Hilfe des zweiten Magnetschalters kann überwacht werden, ob der Mixerbehälter ordnungsgemäß mit dem Behälterdeckel verschlossen ist. Dies ist insbesondere dann wichtig, wenn sich in dem Mixerbehälter ein Schneidwerk befindet, welches im Betrieb bei geöffnetem Behälterdeckel Verletzungen verursachen kann.

Vorteilhafterweise ist an dem Mixerbehälter, insbesondere in einem an dem Mixerbehälter vorgesehenen Behältergriff, ein zwischen einer ersten Position und einer zweiten Position hin- und her bewegliches Gestänge, insbesondere eine Koppelstange, vorgesehen, welches derart mit dem Behälterdeckel in Eingriff gelangt, dass das Gestänge bei ordnungsgemäß geschlossenem Behälterdeckel die erste Position und sonst die zweite Position einnimmt, wobei mit Hilfe des Gestänges der zweite Magnetschalter betätigt wird.

Durch die Verwendung eines Gestänges ist es möglich, den zweiten Magnetschalter an einen anderen Ort als direkt am Behälterdeckel anzuordnen, da das Gestänge die Information, ob der Behälterdeckel ordnungsgemäß auf dem Mixerbehälter aufgesetzt ist, an einen anderen Ort überträgt. Beispielsweise kann an dem Gestänge ein Magnet befestigt werden, welcher zusammen mit dem Gestänge je nach Position des Behälterdeckels den zweiten Magnetschalter am Küchengerät betätigt oder nicht.

Der zweite Magnetschalter kann einen zweiten Magnet und einen magnetisierbaren, insbesondere weichmagnetisierbaren, vorzugsweise ferromagnetischen, zweiten Schaltschieber, aufweisen, mit dem ein von dem zweiten Magnetsensor zu erfassendes zweites Magnetfeld beeinflusst werden kann, insbesondere an dem zweiten Magnetsensor konzentriert oder von dem zweiten Magnetsensor abgeschirmt, wobei der zweite Schaltschieber insbesondere an dem Mixerbehälter vorgesehen ist.

Mit Hilfe des Gestänges kann der zweite Magnetschalter von Ferne betätigt werden. Mit Hilfe des zweiten. Schaltschiebers kann ein Betätigen des zweiten Magnetsensors bewirkt werden. Der zweite Magnet kann an dem Mixerbehälter vorgesehen sein.

Vorteilhafterweise ist der zweite Magnetsensor an dem der Werkzeugkupplung zugewandten Ende des Gestänges angeordnet. Auch kann der zweite Magnetsensor an dem deckelseitigen Ende des Gestänges angeordnet sein. Insbesondere wenn der zweite Schaltschieber an dem der Werkzeugkupplung zugewandten Ende des Gestänges angeordnet ist, ist es möglich, den zweiten Sensor direkt am Küchengerät anzuordnen, welches besonders einfach realisierbar ist, da keine elektrischen Durchführungen für den zweiten Magnetsensor vom Küchengerät zum Werkzeug hin erforderlich sind.

Vorteilhafterweise werden mit Hilfe mindestens eines Schaltschiebers eine mehrzahlige Anzahl von Sicherheitsüberprüfungen mit einer geringen Anzahl von Magnetschalter, insbesondere mit Hilfe eines Schaltschiebers mindestens zwei Sicherheitsüberprüfungen mit nur einem Magnetschalter, durchgeführt. Durch die Verwendung eines Schaltschiebers ist es möglich, ein und denselben Magnetsensor zu verwenden um gleichzeitig zwei Sicherheitsüberprüfungen, beispielsweise eine Überprüfung dass ein Mixerbehälter ordnungsgemäß eingesetzt ist und eine Überprüfung, dass ein Behälterdeckel des Mixerbehälters ordnungsgemäß aufgesetzt ist, durchzuführen.

Beispielsweise betätigt ein an einem Werkzeug befindlicher Magnet den am Küchengerät befindlichen Magnetsensor erst dann, wenn zwischen dem Magnet und dem Magnetsensor der Schaltschieber angeordnet ist, wobei die Anordnung des Magneten und des Schaltschiebers so ausgestaltet ist, dass sie ein Betätigen des Magnetschalters erst dann bewirken, wenn sowohl das erste als auch das zweite Werkzeug bzw. der Mixerbehälter und der Behälterdeckel ordnungsgemäß aufgesetzt sind.

Vorteilhafterweise weist das Küchengerät zur Reduzierung von Störeinflüssen durch externe Magneten einen Magnetschalter auf, dessen Magnetsensor in einer Vertiefung angeordnet ist, wobei der korrespondierende Magnet in die Vertiefung eingreift. Mit Hilfe der Vertiefung wird sichergestellt, dass andere im Haushalt übliche Magnete (z.B. Magnete einer magnetischen Pinwand) den Einschalter nicht entriegeln können, wenn sie in die Nähe des Magnetsensors gelangen. Die Vertiefung kann ein Volumen von weniger als 3 cm³, insbesondere von weniger als 2 cm³, beispielsweise weniger als 1 cm³, aufweisen.

Weitere vorteilhafte Einzelheiten und Ausgestaltungen, die jeweils angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
Fig. 1 ein erfindungsgemäßes Küchengerät in einer perspektivischen Schrägansicht seitlich von oben,
Fig. 2 einen in ein erfindungsgemäßes Küchengerät eingesetzten Mixerbehälter des erfindungsgemäßen Küchengeräts im Längsschnitt mit eingesetztem Behälterdeckel; und
Fig. 3 einen in ein erfindungsgemäßes Küchengerät eingesetzten Mixerbehälter im Längsschnitt ohne eingesetztem Behälterdeckel.

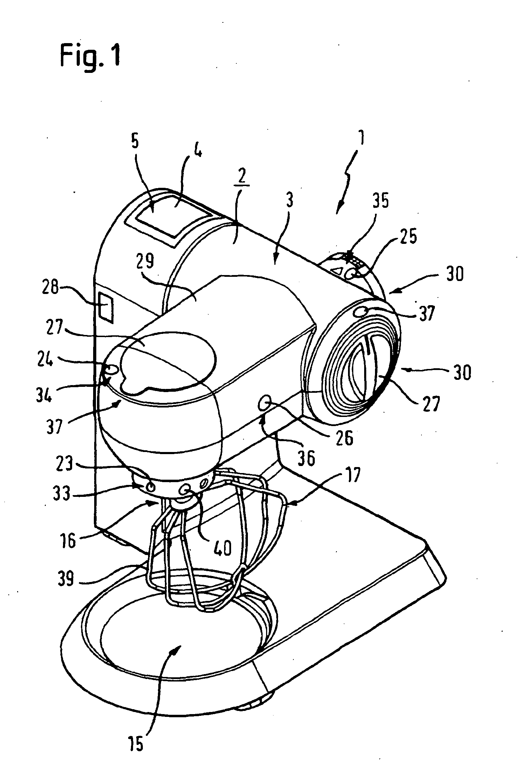

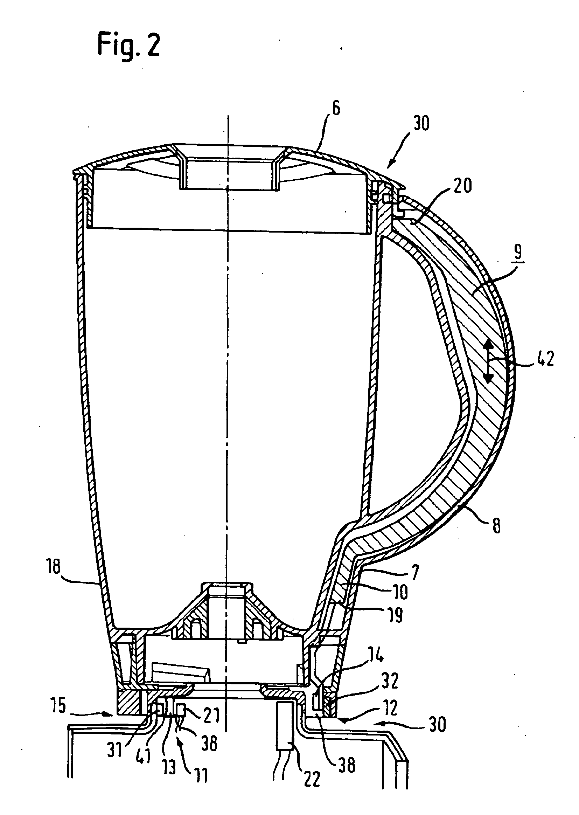

Fig. 1 zeigt ein erfindungsgemäßes Küchengerät 1 mit einem Gerätegehäuse 2, welches einen Elektromotor 3 aufweist, der mit einem Einschalter 4 eingeschaltet werden kann. Der Einschalter 4 ist erst dann wirksam bzw. erst dann aktivierbar, wenn er durch eine Sicherheitsverriegelung 5 freigegeben ist. Mit Hilfe der Sicherheitsverriegelung 5 wird sichergestellt, dass ein z. B. als Rührbesen 39 ausgestaltetes erstes Werkzeug 17 bzw. ein z. B. als Mixerbehälter 7 ausgestaltetes zweites Werkzeug 18 (siehe Fig. 2 und 3) ordnungsgemäß in das Küchengerät 1 eingesetzt ist. Mit der Sicherheitsverriegelung 5 wird auch sichergestellt, dass ein Behälterdeckel 6 für den Mixerbehälter 7 (s. Fig. 2 und 3) ordnungsgemäß verschlossen ist. Nachdem die Sicherheitsverriegelung 5 erkannt hat, dass das Küchengerät 1 vollständig zusammengebaut wurde bzw. die Werkzeuge 17, 18 ordnungsgemäß angeschlossen wurden, wird der Einschalter 4 aktiviert, so dass erst zu diesem Zeitpunkt der Elektromotor 3 bzw. das Küchengerät 1 in Betrieb genommen werden kann. Hierdurch wird die Sicherheit bei der Verwendung des Küchengeräts 1 erheblich gesteigert. Das Küchengerät 1 weist eine erste 15, zweite 16 und eine dritte 27 Werkzeugkupplung auf, welche von entsprechenden Magnetsensoren 21-26 (s. a. Fig. 2 und 3) überwacht werden. Beispielsweise wird die zweite Werkzeugkupplung 16 mit Hilfe eines dritten Magnetschalters 33, der einen dritten Magnetsensor 23 aufweist, überwacht. Eine dritte Werkzeugkupplung 27 wird mit Hilfe eines Sensors 37, der als vierter Magnetsensor 24 ausgestaltet sein kann, überwacht. Der vierte Magnetsensor 24 ist einem vierten Magnetschalter 34 zugeordnet, mit dem ein vollständiges Verschließen der dritten Werkzeugkupplung 27 überwacht wird. Die Magnetschalter 11, 12, 33-36 bzw. die Magnetsensoren 21-26 sind so beschaffen bzw. an den jeweiligen Werkzeugkupplungen 17, 18, 27 derart angeordnet, dass sie erst dann betätigt werden können, wenn eine von diesem Magnetschalter 11, 12, 33-36 zu überwachende Schnittstelle 30 vollständig funktionstüchtig, abgesichert bzw. verschlossen ist. Das Küchengerät 1 weist ein Gerätegehäusedeckel 29 auf, mit dem das Gerätegehäuse 2 geöffnet werden kann. Auch der Gerätegehäusedeckel 29 wird mit Hilfe eines Magnetschalters 36 und eines sechsten Magnetsensors 26 überwacht. Die erste Werkzeugkupplung 15 ist dazu geeignet und bestimmt, einen Mixerbehälter 7 sicher aufzunehmen. Ein Werkzeugtypsensor 40 an dem Küchengerät 1 erfasst den Typ des eingesetzten Werkzeugs 17 und eine Gerätesteuerung 28 steuert den Elektromotor 3 entsprechend an, wobei insbesondere die Geschwindigkeit des Werkzeugs 17 geeignet gewählt wird. Ein fünfter Magnetsensor 25 überwacht als Teil eines weiteren Magnetschalters 35 die Schnittstelle 30, welche zur Aufnahme einer Getreidemühle (nicht dargestellt) geeignet ist. Durch die Verwendung der Vielzahl von Magnetschaltern 11, 12, 33-36 bzw. der Magnetsensoren 21-26 wird ein Betriebszustand des Küchengeräts 1 sicherheitstechnisch und funktionstechnisch im Wesentlichen vollständig erfasst. Die Magnetsensoren 21-26 sind als Reed-Sensoren vorgesehen.

Fig. 2 zeigt einen Mixerbehälter 7 des erfindungsgemäßen Küchengeräts 1 im Längsschnitt mit einem Behältergriff 8. Mit Hilfe eines in dem Behältergriff 8 zwischen einer ersten und einer zweiten Position hin- und her beweglichen Gestänges 9, welches als Koppelstange 10 ausgestaltet ist, wird die Schnittstelle 30 an einem Behälterdeckel 6 überwacht, indem das Gestänge 9 bei ordnungsgemäß eingesetztem Behälterdeckel 6 auf einen zweiten Schaltschieber 14 drückt, der dadurch in einen Zwischenraum 38 zwischen einem zweiten Magnetsensor 22 und einen am Mixerbehälter 7 angeordneten zweiten Magneten 32 geschoben wird. Der zweite Schaltschieber 14 ist aus einem ferromagnetischen Material gefertigt und lenkt das von dem zweiten Magneten 32 erzeugte magnetische Feld auf den zweiten Magnetsensor 22, der dann ein entsprechendes Signal an die Gerätesteuerung 28 liefert. Der Schaltschieber 14 kann ein quaderförmiger Block aus Eisen sein. An der ersten Werkzeugkupplung 15 ist darüber hinaus ein erster Magnetschalter 11 angeordnet, mit dem ein ordnungsgemäßes Einsetzen des Mixerbehälters 7 in die erste Werkzeugkupplung 15 überwacht wird, indem ein erster Schaltschieber in einen Zwischenraum 38 zwischen einem ersten Magnetsensor 21 und einem ersten Magnet 31 eingeschoben wird, so dass das von dem ersten Magnet 31 erzeugte Magnetfeld auf den ersten Magnetsensor gelenkt wird, so dass dieser ein ordnungsgemäßes Verbinden des Mixerbehälters 7 mit der ersten Werkzeugkupplung 15 anzeigt. Der erste Magnetschalter 11 weist eine Vertiefung 41 auf, in welche der erste Schaltschieber 13 eingreifen muss, um den ersten Magnetschalter 11 zu betätigen. Der Behälterdeckel 6 gelangt an einem deckelseitigen Ende 20 des Gestänges 9 mit dem Gestänge 9 in mechanischen Eingriff. Das Gestänge 9 bewegt sich entlang einer Bewegungsrichtung 42 zwischen einer ersten und einer zweiten Position hin und her und positioniert somit einen zweiten Schaltschieber 14 eines zweiten Magnetschalters 12 in einen Zwischenraum 38 zwischen einem zweiten Magnet 32 und einem zweiten Magnetsensor 22. Der zweite Magnetschalter 12 ist an der Schnittstelle 30 angeordnet.

Fig. 3 zeigt einen Mixerbehälter 7 ohne Behälterdeckel 6 im Längsschnitt. Man erkennt, dass der zweite Schaltschieber nicht in dem Zwischenraum 38 angeordnet ist, so dass der zweite Magnetschalter 12 mit dem zweiten Magnetsensor 22 und dem zweiten Magnet 32 nicht geschlossen ist. Folglich kann das Küchengerät 1 nicht in Betrieb genommen werden. Ein vierter Magnetschalter 34 weist einen Magneten 32 auf, der den ersten Magnetsensor 21 bei einem ordnungsgemäß in die Werkzeugkupplung 15 eingesetzten Mixerbehälter 7 betätigt. Ein weiterer Magnetschalter 33 ist an der ersten Werkzeugkupplung 15 vorgesehen. Der weitere Magnetsensor umfasst eine Vertiefung 41, in der ein dritter Magnetsensor 23 angeordnet ist und in die der zugeordnete zweite Magnet 32 eingreift. Durch die Vertiefung wird der dritte Magnetsensor 23 von dem Einfluss von externen Magneten (nicht dargestellt) geschützt, da diese hierdurch von dem dritten Magnetsensor 23 hinreichend weit beabstandet werden. Hierdurch wird die Sicherheit der Überwachung und die Funktionszuverlässigkeit der Sicherheitsregelung 5 weiter gesteigert.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhaftes Küchengerät 1, insbesondere elektromotorisches Küchengerät 1, vorzugsweise elektromotorische Solo- oder Universalküchenmaschine, kann einen Einschalter 4 und eine dem Einschalter 4 zugeordnete Sicherheitsverriegelung 5 umfassen, die nur dann den Einschalter 4 entriegelt und einen Betrieb des Küchengeräts 1 zulässt, wenn das Küchengerät 1 ordnungsgemäß zusammengebaut ist, und ist dadurch gekennzeichnet, dass die Sicherheitsverriegelung 5 mindestens vier, vorzugsweise mindestens sechs, separate Magnetschalter 11, 12, 33 - 36 mit Magnetsensoren 21 - 26, insbesondere Reed-Sensoren, aufweist. Insbesondere ist mindestens ein Magnetschalter 11, 12, 33 - 36 mit mindestens einem Magnetsensor 21 - 26 vorgesehen, wobei der Magnetsensor 21 -26 ein Reed-Sensor ist. In einer Ausgestaltung weist das Küchengerät 1 mindestens einen ansteckbaren Mixerbehälter 7 auf, der mit einer ersten Werkzeugkupplung 15 mit dem Küchengerät 1 verbindbar ist, wobei an der ersten Werkzeugkupplung 15 ein erster Magnetsensor 21 für die Überwachung einer ordnungsgemäßen Verbindung des Mixerbehälters 7 mit dem Küchengerät 1 vorgesehen ist. In einer weiteren Ausgestaltung weist der Mixerbehälter 7 einen Behälterdeckel 6 auf und ein zweiter Magnetsensor 22 ist für die Überwachung eines ordnungsgemäßen Schließens des Mixerbehälters 7 mit dem Behälterdeckel 6 vorgesehen. Der zweite Magnetsensor 22 kann an der ersten Werkzeugkupplung 15, vorzugsweise am Küchengerät 1, angeordnet sein, wobei insbesondere an dem Mixerbehälter 7, insbesondere in einem an dem Mixerbehälter 7 vorgesehenen Behältergriff 8, ein zwischen einer ersten Position und , einer zweiten Position hin und her bewegliches Gestänge 9, insbesondere eine Koppelstange 10, vorgesehen ist, welches derart mit dem Behälterdeckel 6 in Eingriff gelangt, dass das Gestänge 9 bei ordnungsgemäß geschlossenem Behälterdeckel 6 die erste Position und sonst die zweite Position einnimmt, wobei mit Hilfe des Gestänges 9 der zweite Magnetsensor 2 betätigbar ist. In einer Weiterbildung weist das Küchengerät 1 mindestens ein ansteckbares erstes Werkzeug 17, insbesondere ein Pürier-, Misch-, Häcksel-, Knet- und/oder Schneidwerk, Schlag- bzw. Rührbesen 39, Getränkemixer, Durchlaufschnitler, Getreidemühle, Zitrus- bzw. Fruchtpresse und/oder Fleischwolf, auf, das mit einer zweiten Werkzeugkupplung 16 mit dem Küchengerät 1 verbindbar ist, wobei an der zweiten Werkzeugkupplung 16 ein dritter Magnetsensor 23 für die Überwachung einer ordnungsgemäßen Verbindung des ersten Werkzeugs 17 mit dem Küchengerät 1 vorgesehen ist. In einer weiteren Weiterbildung weist das Küchengerät 1 mindestens ein ansteckbares zweites Werkzeug 18, insbesondere ein Pürier-, Misch-, Häcksel-, Knet- und/oder Schneidwerk, Schlag- bzw. Rührbesen 39, Getränkemixer, Durchlaufschnitzler, Getreidemühle, Zitrus- bzw. Fruchtpresse und/oder Fleischwolf, auf, das mit einer dritten Werkzeugkupplung 27 mit dem Küchengerät 1 verbindbar ist, wobei an der dritten Werkzeugkupplung 27 ein vierter Magnetsensor 24 für die Überwachung einer ordnungsgemäßen Verbindung des zweiten Werkzeugs 18 mit dem Küchengerät 1 vorgesehen ist. Vorteilhafterweise weist das Küchengerät 1 mehrere, insbesondere mindestens 3, Werkzeugkupplungen 15, 16, 27 für verschiedene Werkzeuge 17, 18, insbesondere Pürier-, Misch-; Häcksel-, Knet- und/oder Schneidwerke, Mixerbehälter 7 und/oder Fleischwolf, auf und jeder Werkzeugkupplung 15, 16, 27 ist mindestens ein Magnetsensor 21- 26 zugeordnet. In einer weiteren Weiterbildung kann mindestens ein Magnetsensor 21-26, insbesondere können mindestens 2, vorteilhafterweise ein überwiegender Anteil der, Magnetsensoren 21- 26 den Typ des eingesetzten Werkzeugs 17, 18 identifizieren. Insbesondere umfasst das Küchengerät 1 eine Gerätesteuerung 28, welche die Betriebsweise des Küchengeräts 1, insbesondere die Geschwindigkeit und/oder Leistungsstufe eines Elektromotors 3, entsprechend der Identifizierung beeinflusst. In einer weiteren Ausgestaltung weist das Küchengerät 1 ein Gerätegehäuse 2 und einen Gerätegehäusedeckel 29 auf und ein fünfter Magnetsensor 5 ist für die Überwachung eines ordnungsgemäßen Schließens des Gerätegehäuses 2 mit dem Gerätegehäusedeckel 29 vorgesehen. In einer Weiterbildung sind die Magnetschalter 11, 12, 33 - 36 bzw. die Magnetsensoren 21 - 26 so beschaffen und/oder angeordnet, dass ein Magnetschalter 11, 12, 33 - 36 erst dann betätigt wird, wenn eine von diesem Magnetschalter 11, 12, 33 - 36 zu überwachende Schnittstelle 30 vollständig funktionstüchtig bzw. abgesichert ist. Vorteilhafterweise weist der Magnetschalter 11, 12, 33 - 36 zur Reduzierung von Störeinflüssen durch externe Magneten eine Vertiefung 41 aufweist, in der der Magnetsensor 21 - 26 angeordnet ist und in die ein Magnet 31, 32 des Magnetschalters 11, 12, 33 - 36 eingreifen kann.

Ein besonders vorteilhaftes Verfahren zum Betreiben eines Küchengeräts 1, insbesondere elektromotorisches Küchengerät 1, vorzugsweise elektromotorische Solo- oder Universalküchenmaschine, besonders bevorzugt eines erfindungsgemäßen Küchengeräts 1, wobei das Küchengerät 1 mehrere einsetzbare Werkzeuge 7, 17, 18, 39, insbesondere ein Mixerbehälter 7, Pürier-, Misch-, Häcksel-, Knet- und/oder Schneidwerke, Schlag- bzw. Rührbesen 39, Getränkemixer, Durchlaufschnitzler, Getreidemühlen, Zitrus- bzw. Fruchtpressen und/oder Fleischwolf, aufweist, wobei eines der Werkzeuge 17, 18 von dem Küchengerät 1 aufgenommen wird, ist dadurch gekennzeichnet, dass mit Hilfe mindestens zweier Sensoren 37, insbesondere mit Hilfe von Magnetsensoren 21 - 26, der Werkzeugtyp des eingesetzten Werkzeugs 17, 18 identifiziert wird und die Betriebsweise des Küchengeräts 1, insbesondere die Geschwindigkeit und/oder Leistungsstufe eines Elektromotors 3, entsprechend der Identifizierung beeinflusst, insbesondere angepasst, wird.

Die Erfindung betrifft ein Küchengerät 1, insbesondere elektromotorisches Küchengerät 1, vorzugsweise elektromotorische Solo- oder Universalküchenmaschine, umfassend einen Einschalter 4 mit einem dem Einschalter 4 zugeordnete Sicherheitsverriegelung 5, die nur dann den Einschalter 4 entriegelt und einen Betrieb des Küchengeräts 1 zulässt, wenn das Küchengerät 1 ordnungsgemäß zusammengebaut ist, und sieht vor, dass die Sicherheitsverriegelung mindestens einen, insbesondere mindestens zwei, vorzugsweise mindestens vier, insbesondere bevorzugt mindestens sechs, vorzugsweise separate, Magnetschalter aufweist, wobei mindestens ein Magnetschalter mindestens einen Magnetsensor umfasst, der ein Reed-Sensor ist. Die Erfindung zeichnet sich dadurch aus, dass das Küchengerät im Betrieb besonders sicher für den Benutzer des Küchengeräts 1 ist.

### Bezugszeichenliste

- 1: Küchengerät
- 2: Gerätegehäuse
- 3: Elektromotor
- 4: Einschalter .
- 5: Sicherheitsverriegelung
- 6: Behälterdeckel
- 7: Mixerbehälter
- 8: Behältergriff
- 9: Gestänge
- 10: Koppelstange
- 11: erster Magnetschalter
- 12: zweiter Magnetschalter
- 13: erster Schaltschieber
- 14: zweiter Schaltschieber
- 15: erste Werkzeugkupplung
- 16: zweite Werkzeugkupplung
- 17: erstes Werkzeug
- 18: zweites Werkzeug
- 19: kupplungsseitiges Ende des Gestänges 9
- 20: deckelseitiges Ende des Gestänges 9
- 21: erster Magnetsensor
- 22: zweiter Magnetsensor
- 23: dritter Magnetsensor
- 24: vierter Magnetsensor
- 25: fünfter Magnetsensor
- 26: sechster Magnetsensor
- 27: dritte Werkzeugkupplung
- 28: Gerätesteuerung
- 29: Gerätegehäusedeckel
- 30: Schnittstelle
- 31: erster Magnet
- 32: zweiter Magnet
- 33- 36: weitere Magnetschalter
- 37: Sensor
- 38: Zwischenraum
- 39: Rührbesen
- 40: Werkzeugtypsensor
- 41: Vertiefung
- 42: Bewegungsrichtung des Gestänges 9

## Patentansprüche

1. Küchengerät (1), insbesondere elektromotorisches Küchengerät (1), vorzugsweise elektromotorische Solo- oder Universalküchenmaschine, umfassend einen Einschalter (4) und eine dem Einschalter (4) zugeordnete Sicherheitsverriegelung (5), die den Einschalter (4) nur dann entriegelt und einen Betrieb des Küchengeräts (1) zulässt, wenn das Küchengerät (1) ordnungsgemäß zusammengebaut ist, wobei die Sicherheitsverriegelung (5) mindestens einen Magnetschalter (11, 12, 33 - 36) mit mindestens einem Magneten (31, 32) und mindestens einem Magnetsensor (21 - 26) aufweist, wobei der Magnetschalter (11, 12, 33 - 36) einen weichmagnetisierbaren, insbesondere ferromagnetischen, Schaltschieber (13, 14) aufweist, mit dem ein von dem Magnetsensor (21 - 26) zu erfassendes Magnetfeld beeinflusst, insbesondere an dem Magnetsensor (21 - 26) konzentriert oder von dem Magnetsensor (21 - 26) abgeschirmt, werden kann,
**dadurch gekennzeichnet, dass** der Schaltschieber (13, 14) zwischen einer ersten Schieberposition und einer zweiten Schieberposition hin und her beweglich ist, derart, dass im ordnungsgemäß zusammengebauten Zustand des Küchengeräts (1) der Schaltschieber (13, 14) in einem Zwischenraum (38) zwischen dem Magneten (31, 32) und dem Magnetsensor (21 - 26) und sonst außerhalb des Zwischenraums (38) angeordnet ist.

2. Küchengerät (1) nach Anspruch 1, **dadurch gekennzeichnet, dass** das Volumen des Zwischenraums (38) weniger als 3 cm³ beträgt, insbesondere weniger als 2 cm³, vorzugsweise weniger als 1 cm³, und/oder mehr als 0,1 cm³, insbesondere mehr als 0,3 cm³.

3. Küchengerät (1) nach einem der vorherigen Ansprüche, **dadurch gekennzeichnet, dass** das Küchengerät (1) mindestens ein ansteckbares Werkzeug (7, 17, 18, 39), insbesondere ein Pürier-, Misch-, Häcksel-, Knet- und/oder Schneidwerk, Schlag- bzw. Rührbesen (39), Getränkemixer, Durchlaufschnitzler, Getreidemühle, Zitrus- bzw. Fruchtpresse, Fleischwolf, und/oder ein Mixerbehälter (7), aufweist, das mit mindestens einer Werkzeugkupplung (15, 16, 27) mit dem Küchengerät (1) verbindbar ist, wobei an der Werkzeugkupplung (15, 16, 27) ein erster Magnetschalter (11) mit einem ersten Magnetsensor (21) für die Überwachung einer ordnungsgemäßen Verbindung des Werkzeugs (17, 18) mit dem Küchengerät (1) vorgesehen ist.

4. Küchengerät (1) nach Anspruch 3, **dadurch gekennzeichnet, dass** der erste Magnetschalter (11) einen ersten Magnet (31) und einen magnetisierbaren, insbesondere weichmagnetisierbaren, vorzugsweise ferromagnetischen, ersten Schaltschieber (13) aufweist, mit dem ein von dem ersten Magnetsensor (21) zu erfassendes erstes Magnetfeld beeinflusst werden kann, wobei der erste Magnet (31) küchengerätseitig und der erste Schaltschieber (13) werkzeugseitig an der Werkzeugkupplung (15, 16, 27) angebracht ist.

5. Küchengerät (1) nach Anspruch 3, **dadurch gekennzeichnet, dass** der erste Magnetschalter (11) einen ersten Magnet (31) aufweist, der werkzeugseitig an der Werkzeugkupplung (15, 16, 27) angebracht ist.

6. Küchengerät (1) nach einem der Anspruch 3 bis 5, **dadurch gekennzeichnet, dass** das Werkzeug (17) ein Mixerbehälter (7) ist, der einen Behälterdeckel (6) aufweist, und ein zweiter Magnetschalter (12) mit einem zweiten Magnetsensor (22) für die Überwachung eines ordnungsgemäßen Schließens des Mixerbehälters (7) mit dem Behälterdeckel (6) vorgesehen ist.

7. Küchengerät (1) nach Anspruch 6, **dadurch gekennzeichnet, dass** an dem Mixerbehälter (7), insbesondere in einem an dem Mixerbehälter (7) vorgesehenen Behältergriff (8), ein zwischen einer ersten Position und einer zweiten Position hin und her bewegliches Gestänge (9), insbesondere eine Koppelstange (10), vorgesehen ist, welches derart mit dem Behälterdeckel (6) in Eingriff gelangt, dass das Gestänge (9) bei ordnungsgemäß geschlossenem Behälterdeckel (6) die erste Position und sonst die zweite Position einnimmt, wobei mit Hilfe des Gestänges (9) der zweite Magnetschalter (12) betätigbar ist.

8. Küchengerät (1) nach Anspruch 6 oder 7, **dadurch gekennzeichnet, dass** der zweite Magnetschalter (12) einen zweiten Magnet (32) und einen magnetisierbaren, insbesondere weichmagnetisierbaren, vorzugsweise ferromagnetischen, zweiten Schaltschieber (14) aufweist, mit dem ein von dem zweiten Magnetsensor (22) zu erfassendes zweites Magnetfeld beeinflusst werden kann, insbesondere an dem zweiten Magnetsensor (22) konzentriert oder von dem zweiten Magnetsensor (22) abgeschirmt, wobei der zweite Schaltschieber (14) insbesondere an dem Mixerbehälter (7) vorgesehen ist.

9. Küchengerät (1) nach Anspruch 8, **dadurch gekennzeichnet, dass** der zweite Schaltschieber (14) an dem der Werkzeugkupplung (15) zugewandten Ende (19) des Gestänges (9) angeordnet ist.

10. Küchengerät (1) nach Anspruch 6 oder 7, **dadurch gekennzeichnet, dass** der zweite Magnet (32) an dem Mixerbehälter (7) vorgesehen ist.

11. Küchengerät (1) nach einem der Ansprüche 6 bis 9, **dadurch gekennzeichnet, dass** der zweite Magnetsensor (22) an dem der Werkzeugkupplung (15) zugewandten Ende (19) des Gestänges (9) angeordnet ist.

12. Küchengerät (1) nach einem der Ansprüche 6 bis 9, **dadurch gekennzeichnet, dass** der zweite Magnetsensor (22) an dem deckelseitigen Ende (20) des Gestänges (9) angeordnet ist.

13. Küchengerät (1) nach einem der vorherigen Ansprüche, **dadurch gekennzeichnet, dass** mit Hilfe mindestens eines Schaltschiebers (13, 14) eine mehrzahlige Anzahl von Sicherheitsüberprüfungen mit einer geringen Anzahl von Magnetschalter (11, 12, 33 - 36), insbesondere mit Hilfe eines Schaltschiebers (13, 14) mindestens zwei Sicherheitsüberprüfungen mit nur einem Magnetschalter (11, 12, 33 36), durchgeführt werden.

14. Küchengerät (1) nach einem der vorherigen Ansprüche, **dadurch gekennzeichnet, dass** zur Reduzierung von Störeinflüssen durch externe Magneten eine Vertiefung (41) vorgesehen ist, in der der Magnetsensor (21 - 26) angeordnet ist und in die der dem Magnetsensor (21-26) zugeordnete Magnet (31, 32) eingreifen kann.

15. Küchengerät nach einem der vorherigen Ansprüchen, **dadurch gekennzeichnet, dass** der Magnetsensor (21 - 26) einen Reed-Sensor umfasst.

## Claims

1. Kitchen appliance (1), particularly electric-motor-driven kitchen appliance (1), preferably electric-motor-driven solo or universal food processor, comprising an on-switch (4) and a safety lock (5), which is associated with the on-switch (4) and which unlocks the on-switch (4) and permits operation of the kitchen appliance (1) only when the kitchen appliance (1) is correctly assembled, wherein the safety lock (5) comprises at least one magnetic switch (11, 12, 13 - 36) with at least one magnet (31, 32) and at least one magnetic sensor (21 - 26), wherein the magnetic switch (11, 12, 33 - 36) comprises a soft-magnetisable, particularly ferromagnetic, switch slide (13, 14) by which a magnet field, which is to be detected by the magnetic sensor (21 - 26), can be influenced, particularly concentrated at the magnetic sensor (21 - 26) or screened from the magnetic sensor (21 - 26), **characterised in that** the switch slide (13, 14) is so movable back and forth between a first slide position and a second slide position that in the correctly assembled state of the kitchen appliance (1) the switch slide (13, 14) is arranged in an intermediate space (38) between the magnet (31, 32) and the magnetic sensor (21 - 26) and otherwise outside the intermediate space (38).

2. Kitchen appliance (1) according to claim 1, **characterised in that** the volume of the intermediate space (38) is less than 3 cm³, particularly less than 2 cm³, preferably less than 1 cm³, and/or more than 0.1 cm³, particularly more than 0.3 cm³.

3. Kitchen appliance (1) according to one of the preceding claims, **characterised in that** the kitchen appliance (1) comprises at least one attachable tool (7, 17, 18, 39), particularly a puréeing, mixing, chopping, kneading and/or cutting mechanism, beating or stirring whisk (39), drink mixer, through shredder, flour mill, citrus or fruit press, mincer and/or a mixer container (7), which is connectible with the kitchen appliance (1) by at least one tool coupling (15, 16, 27), wherein a first magnetic switch (11) with a first magnetic sensor (21) for monitoring correct connection of the tool (17, 18) with the kitchen appliance (1) is provided at the tool coupling (15, 16, 27).

4. Kitchen appliance (1) according to claim 3, **characterised in that** the first magnetic switch (11) comprises a magnetisable, particularly soft-magnetisable, preferably ferromagnetic, first switch slide (13), by which a first magnet field to be detected by the first magnetic sensor (21) can be influenced, wherein the first magnet (31) is mounted at the kitchen appliance side and the first switch slide (13) at the tool side at the tool coupling (15, 16, 27).

5. Kitchen appliance (1) according to claim 3, **characterised in that** the first magnetic switch (11) comprises a first magnet (31) mounted at the tool side at the tool coupling (15, 16, 17).

6. Kitchen appliance (1) according any one of claims 3 to 5, **characterised in that** the tool (17) is a mixer container (7), which comprises a container lid (6), and a second magnetic switch (12) with a second magnetic sensor (22) is provided for monitoring correct closing of the mixer container (7) by the container lid (6).

7. Kitchen appliance (1) according to claim 6, **characterised in that** provided at the mixer container (7), particularly in a container handle (8) provided at the mixer container (7), is a linkage (9), particularly a coupling rod (10), which is movable back and forth between a first position and a second position and which is so engageable with the container lid (6) that a linkage (9) adopts the first position when the container lid (6) is correctly closed and otherwise the second position, wherein the second magnetic switch (12) is actuable with the help of the linkage (9).

8. Kitchen appliance (1) according to claim 6 or 7, **characterised in that** the second magnetic switch (12) comprises a second magnet (32) and a magnetisable, particularly soft-magnetisable, preferably ferromagnetic, second switch slide (14), by which a second magnetic field to be detected by the second magnetic sensor (22) can be influenced, particularly concentrated at the second magnetic sensor (22) or screened from the second magnetic sensor (22), wherein the second switch slide (14) is provided at, in particular, the mixer container (7).

9. Kitchen appliance (1) according to claim 8, **characterised in that** the second switch slide (14) is provided at the end (19) of the linkage (9) remote from the tool coupling (15).

10. Kitchen appliance (1) according to claim 6 or 7, **characterised in that** the second magnet (32) is provided at the mixer container (7).

11. Kitchen appliance (1) according to any one of claims 6 to 9, **characterised in that** the second magnetic sensor (22) is arranged at the end (19) of the linkage (9) facing the tool coupling (15).

12. Kitchen appliance (1) according to any one of claims 6 to 9, **characterised in that** the second magnetic sensor (22) is arranged at the end (20), which is at the lid side, of the linkage (9).

13. Kitchen appliance (1) according to any one of the preceding claims, **characterised in that** a plurality of safety checks is performed with the help of at least one switch slide (13, 14) with a small number of magnetic switches (11, 12, 33 - 36), particularly at least two safety checks with the help of a switch slide (13, 14) and with only one magnetic switch (11, 12, 33 - 36).

14. Kitchen appliance (1) according to any one of the preceding claims, **characterised in that** provided for reduction of disturbing influences by external magnets is a recess (41) in which the magnetic sensor (21 - 26) is arranged and in which the magnet (31, 32) associated with the magnetic sensor (21 - 26) can engage.

15. Kitchen appliance according to any one of the preceding claims, **characterised in that** the magnetic sensor (21- 26) comprises a Reed sensor.

## Revendications

1. Appareil de cuisine (1), en particulier appareil de cuisine (1) à moteur électrique, de préférence ustensile de cuisine à moteur électrique à fonction unique ou universel, comprenant un commutateur (4) et un verrouillage de sécurité (5) affecté au commutateur (4), lequel verrouillage de sécurité ne déverrouille le commutateur (4) et ne permet un fonctionnement de l'appareil de cuisine (1) que lorsque l'appareil de cuisine (1) est assemblé correctement, dans lequel le verrouillage de sécurité (5) présente au moins un commutateur magnétique (11, 12, 33-36) avec au moins un aimant (31, 32) et au moins un capteur magnétique (21 -26), dans lequel le commutateur magnétique (11, 12, 33 - 36) présente un relais capteur (13, 14) magnétisable à basse coercitivité, en particulier ferromagnétique, avec lequel un champ magnétique qui doit être perçu par le capteur magnétique (21 - 26) peut être influencé, en particulier concentré au capteur magnétique (21 - 26) ou isolé du capteur magnétique (21 - 26), **caractérisé en ce que** le relais capteur (13, 14) est mobile entre une première position de coulisse et une deuxième position de coulisse de sorte que, lorsque l'appareil de cuisine (1) est assemblé correctement, le relais capteur (13, 14) est disposé dans un espace intermédiaire (38) entre l'aimant (31, 32) et le capteur magnétique (21 - 26) et en dehors de l'espace intermédiaire (38) dans le cas contraire.

2. Appareil de cuisine (1) selon la revendication 1, **caractérisé en ce que** le volume de l'espace intermédiaire (38) est inférieur à 3 cm³, en particulier inférieur à 2 cm³, de préférence inférieur à 1 cm³ et/ou supérieur à 0,1 cm³, en particulier supérieur à 0,3 cm³.

3. Appareil de cuisine (1) selon l'une des revendications précédentes, **caractérisé en ce que** l'appareil de cuisine (1) présente au moins un outil amovible (7, 17, 18, 39), en particulier un accessoire de réduction en purée, de mélangeage, de hachage, de pétrissage et/ou de tranchage, un fouet (39), un mixeur à boissons, un hachoir par passage, un moulin à grains, un presse agrumes resp. un presse fruits, un hache-viande et/ou un récipient de mixeur (7) qui peut être relié à l'appareil de cuisine (1) avec au moins un accouplement d'outil (15, 16, 27), dans lequel un premier commutateur magnétique (11) avec un premier capteur magnétique (21) pour la surveillance d'un lien correct de l'outil (17, 18) avec l'appareil de cuisine (1) est prévu sur l'accouplement d'outil (15, 16, 27).

4. Appareil de cuisine (1) selon la revendication 3, **caractérisé en ce que** le premier commutateur magnétique (11) présente un premier aimant (31) et un premier relais capteur (13) magnétisable, en particulier magnétisable à basse coercitivité, de préférence ferromagnétique, avec lequel un premier champ magnétique qui doit être perçu par le premier capteur magnétique (21) peut être influencé, dans lequel le premier aimant (31) est disposé du côté de l'appareil de cuisine et le premier relais capteur (13) du côté de l'outil sur l'accouplement d'outil (15, 16, 27).

5. Appareil de cuisine (1) selon la revendication 3, **caractérisé en ce que** le premier commutateur magnétique (11) présente un premier aimant (31), lequel est disposé du côté de l'outil sur l'accouplement d'outil (15, 16, 27).

6. Appareil de cuisine (1) selon l'une des revendications 3 à 5, **caractérisé en ce que** l'outil (17) est un récipient de mixeur (7) qui présente un couvercle de récipient (6) et **en ce qu'**un deuxième commutateur magnétique (12) avec un deuxième capteur magnétique (22) pour la surveillance d'une fermeture correcte du récipient de mixeur (7) avec le couvercle de récipient (6) est prévu.

7. Appareil de cuisine (1) selon la revendication 6, **caractérisé en ce que**, sur le récipient de mixeur (7), en particulier dans une poignée de récipient (8) prévue sur le récipient de mixeur (7), une tringlerie mobile (9) déplaçable entre une première position et une deuxième position, en particulier une tringle d'accouplement (10), est prévue, laquelle s'engage de telle sorte dans le couvercle de récipient (6) que la tringlerie (9), lorsque le couvercle de récipient (6) est correctement fermé, adopte la première position et sinon la deuxième position, dans lequel le deuxième commutateur magnétique (12) peut être actionné par la tringlerie (9).

8. Appareil de cuisine (1) selon la revendication 6 ou 7, **caractérisé en ce que** le deuxième commutateur magnétique (12) présente un deuxième aimant (32) et un deuxième relais capteur (14) magnétisable, en particulier magnétisable à basse coercitivité, de préférence ferromagnétique, avec lequel un deuxième champ magnétique qui doit être perçu par le deuxième capteur magnétique (22) peut être influencé, en particulier concentré au deuxième capteur magnétique (22) ou isolé du deuxième capteur magnétique (22), dans lequel le deuxième relais capteur (14) est prévu en particulier sur le récipient de mixeur (7).

9. Appareil de cuisine (1) selon la revendication 8, **caractérisé en ce que** le deuxième relais capteur (14) est disposé à l'extrémité (19) de la tringlerie (9) dirigée vers l'accouplement d'outil (15).

10. Appareil de cuisine (1) selon la revendication 6 ou 7, **caractérisé en ce que** le deuxième aimant (32) est prévu sur le récipient de mixeur (7).

11. Appareil de cuisine (1) selon l'une des revendications 6 à 9, **caractérisé en ce que** le deuxième capteur magnétique (22) est disposé à l'extrémité (19) de la tringlerie (9) dirigée vers l'accouplement d'outil (15).

12. Appareil de cuisine (1) selon l'une des revendications 6 à 9, **caractérisé en ce que** le deuxième capteur magnétique (22) est disposé à l'extrémité (20) dirigée vers le couvercle de la tringlerie (9).

13. Appareil de cuisine (1) selon l'une des revendications précédentes, **caractérisé en ce qu'**une pluralité de contrôles de sécurité sont réalisés à l'aide d'au moins un relais capteur (13, 14) avec un nombre réduit de commutateurs magnétiques (11, 12, 33 - 36), en particulier au moins deux contrôles de sécurité sont réalisés à l'aide d'un relais capteur (13, 14) avec un seul commutateur magnétique (11, 12, 33 -36).

14. Appareil de cuisine (1) selon l'une des revendications précédentes, **caractérisé en ce qu'**un creux (41), dans lequel le capteur magnétique (21 -26) est disposé et dans lequel l'aimant (31, 32) affecté au capteur magnétique (21 - 26) peut s'engager, est prévu afin de réduire les influences perturbatrices d'aimants externes.

15. Appareil de cuisine selon l'une des revendications précédentes, **caractérisé en ce que** le capteur magnétique (21 - 26) comprend un capteur Reed.
